# EUROPÄISCHE PATENTSCHRIFT

(11) **EP 1 254 739 B1**
(45) Veröffentlichungstag und Bekanntmachung des Hinweises auf die Patenterteilung: **02.08.2006**
(21) Anmeldenummer: 02008288.9
(22) Anmeldetag: 23.04.2002
(51) Int. Cl.: B23Q 1/00, B23Q 11/10

(54) **Spindelkopf für Werkzeuge**
Spindle unit for tools
Tête de broche pour outils

(30) Priorität: 02.05.2001 DE 10121694
(43) Veröffentlichungstag der Anmeldung: 06.11.2002
(73) Patentinhaber: Sauter Feinmechanik GmbH, D-72555 Metzingen (DE)
(72) Erfinder: Sahm, Detlef, Dr., 73669 Lichtenwald (DE); Wezel, Rolf, 72555 Metzingen (DE)
(74) Vertreter: Bartels & Partner

(56) Entgegenhaltungen:
- EP-A- 0 319 662
- EP-A- 0 635 332
- DE-A- 4 226 922
- DE-A- 19 516 986
- DE-C- 3 625 144
- US-A- 2 777 702
- US-A- 3 024 030
- US-A- 5 613 812

## Beschreibung

Die Erfindung betrifft einen Spindelkopf für Werkzeuge, der in eine Werkzeugscheibe mit hierfür vorgesehenen Aufnahmen einsetzbar ist, und dessen Spannmittel für den Schaft des Werkzeuges aufweisende Spindel in einem an den Werkzeugschaft aufnehmenden ersten Endabschnitt sich anschließenden zweiten Abschnitt drehbar im Spindelkopfgehäuse gelagert ist, mit einer Spindellagerung und mit einer zumindest teilweise im Spindelkopfgehäuse geführten Kühlmittelzufuhr, wobei die Kühlmittelübertragung über mindestens einen Kühlmittelkanal erfolgt, der eine innere Kühlmittelzufuhr für das jeweilige Werkzeug realisiert, wobei die innere Kühlmittelzufuhr für das Werkzeug über eine Abdichteinrichtung mit Drosselstelle von Teilen eines Drainagekanals getrennt ist und wobei die Abdichteinrichtung mindestens einen Abdichtring aufweist, der die Spindel umfaßt, (siehe z.B. EP-A-0635 332).

Durch die DE 195 16 986 C2 ist ein Spindelkopf für Werkzeuge bekannt, der in eine Werkzeugscheibe eines Werkzeugrevolvers mit Aufnahmebohrungen nach DIN 69880 (insbesondere Teil 6, März 2000, Seiten 2 und 4) einsetzbar ist.

Des weiteren befindet sich die Kühlmittelübertragung in einem werkzeugseitigen Spindelkopfdeckel, in dem eine Ringnut vorgesehen ist, in die ein Kühlmittelzufuhrkanal mündet und über den eine innere Kühlmittelzufuhr für das jeweilige Werkzeug realisiert ist. Die genannte Kühlmittelübertragung befindet sich bei der bekannten Lösung vor der Spindellagerung und die Ringnut ist zum ersten Endabschnitt hin offen und mit einem Verbindungskanal versehen, dessen eines Ende in der auf die Ringnut ausgerichteten Ringzone der Mantelfläche des ersten Endabschnittes und dessen anderes Ende in einen Spannmittelraum der Spindel mündet, mit dem die im Schaftende des Werkzeuges vorgesehene Eintrittsöffnung des das Werkzeug durchdringenden Kühlmittelkanals in Verbindung steht. Die Ringnut selbst ist nach außen hin durch einen äußeren und nach innen zu der Spindellagerung hin durch eine innere Spaltdichtung abgedichtet, wobei sowohl die äußere als auch die innere Spaltdichtung von der Außenmantelfläche der Spindel und der Innenmantelfläche des Spindelkopfes begrenzt sind. Hierdurch ist ein Spindelkopf für Werkzeuge mit innerer Kühlmittelzufuhr geschaffen, der wenig Bauraum an der Werkzeugscheibe verbraucht und wobei eine sichere Abdichtung gewährleistet ist, die die Spindellagerung keinesfalls dem schädigenden Kühlmittel aussetzt.

Durch die DE 38 24 427 A1 ist eine Werkzeugmaschine mit einem Spindelkopfträger und einem daran angeordneten Spindelkopf bekannt, der mit einer Spindel versehen ist. Die im Spindelkopfträger gelagerte Antriebswelle steht über Zahnräder, insbesondere Kegelräder, mit der Spindel in Antriebsverbindung. Im Bereich der Zahnräder ist ein Ölumlaufraum zur Schmierung der Zahnräder vorgesehen, der gegenüber dem stationären Teil des Spindelkopfes durch Dichtglieder abgedichtet ist, die über Druckluftzuleitungen mit Druckluft beaufschlagt und die über Drosselbohrungen Druckluft zur vorderen mit rotierenden Abdichtgegenflächen zusammenarbeitende Dichtflächen der Dichtglieder führen. Die Druckverhältnisse und die Leitungsquerschnitte sind dabei so gewählt, daß für die Abdichtung zwischen den rotierenden Abdichtgegenflächen und den Dichtflächen der Dichtglieder zur berührungslosen Abdichtung ein Dichtspalt vorliegt. Mit der bekannten Lösung ist somit eine Ölschmierung durch einen Ölumlaufraum erreicht, wobei aufgrund der Abdichtung des Ölumlaufraumes über die Druckluft vermieden wird, daß Öl an einer unerwünschten Stelle austritt. Die in den Ölumlaufraum eingebrachte Druckluft und der dabei entstehende Überdruck sorgen dafür, daß das Schmieröl an die zu schmierenden Zahnräder gelangt, wobei der Ölumlaufraum dann mit einem Ölluftgemisch gefüllt ist und die Zahnräder nicht vollständig im Öl laufen müssen. Der genannte Dichtspalt der jeweiligen Dichtglieder dient mithin der Schmiermittelzufuhr für das genannte Zahnradgetriebe.

Durch die DE 42 26 922 A1 ist ein gattungsgemäßer Spindelkopf mit Kühlmittelvorrichtung bekannt mit einer Anordnung zur Versorgung der jeweiligen Bohr- und/oder Schneidwerkzeuge mit Kühl- und/oder Schmiermittel, wobei die Spindel mit einem über eine Öffnung eines stationären Zuführorgans gespeisten Axialkanal für den Transport des Kühl- und/oder Schmiermittels zum Werkzeug - Arbeitsbereich versehen ist und das Zuführorgan und die Spindel unter Ausbildung einer Spaltdichtung koaxial ineinandergreifen. Bei der bekannten Lösung werden die Leckagen der Spaltdichtung über einen Entspannungsraum mit Abfluß nach außen (nahezu drucklos) abgeführt und dieser Entspannungsraum ist mit einer weiteren Spaltdichtung gegenüber dem weiteren Spindelkopfgehäuse mit der Lagerseite abgedichtet. Neben der eigentlichen Kühlmittelzufuhr ist für die bekannte Abdichtlösung die Zufuhr von Druckluft notwendig, wobei die Spaltdichtung zur Unterstützung der Dichtwirkung mit dieser Druckluft beaufschlagt wird. Die dahingehend ausgestaltete bekannte Lösung benötigt viel Einbauraum und ist kostenintensiv in der Realisierung und in der Wartung.

Ausgehend von diesem Stand der Technik liegt der Erfindung die Aufgabe zugrunde, die bekannten Spindelkopflösungen noch weiter zu optimieren, insbesondere die Bearbeitungsgenauigkeit mit dem Werkzeug zu erhöhen, den zur Verfügung stehenden Bauraum noch besser zu nutzen sowie die Herstellkosten und mögliche Wartungskosten zu senken. Eine dahingehende Aufgabe löst ein Spindelkopf mit den Merkmalen des Patentanspruches 1 in seiner Gesamtheit.

Dadurch, daß gemäß dem kennzeichnenden Teil des Patentanspruches 1 der jeweilige Abdichtring koaxial zur Spindelachse längsverschiebbar im Spindelkopfgehäuse geführt ist und daß nach der Längsverschiebung in eine Abdichtstellung der jeweilige Abdichtring die innere Kühlmittelzufuhr bis auf eine vorgebbare Leckagemenge von den zuordenbaren Teilen des Drainagekanals trennt, läßt sich die innere Kühlmittelzufuhr aus dem Bereich der Spannmittel für den Schaft des Werkzeuges in entgegengesetzter Richtung nach hinten in das Spindelkopfgehäuse hinein verlagern mit der Folge, daß die Spindellagerung selbst weiter nach vorn in den Bereich der Spannmittel treten kann, so daß das Werkzeug über die Spindelaufnahme und die Spindellagerung besser geführt und abgestützt ist, was der Bearbeitungsgenauigkeit deutlich zugute kommt.

Da die innere Kühlmittelzufuhr nunmehr ausschließlich mittig über die Abdichteinrichtung und in Spindellängsachse erfolgen kann, ist Bauraum eingespart und darüber hinaus eine kostengünstige Lösung erreicht, die auch etwaig nachfolgende Wartungskosten deutlich reduziert.

Durch die Längsverschiebbarkeit des jeweiligen Abdichtringes der Abdichteinrichtung ist eine Art dynamische Abdichtung realisiert, die sich automatisch an vorgegebene Bearbeitungssituationen anpaßt; wie Zufuhr an Kühlschmiermittel, Drehzahl der Spindeleinheit etc.. Durch die schwimmende Anordnung des jeweiligen Abdichtringes ist erreicht, daß in Abhängigkeit der Druckverhältnisse und der Menge an zuzuführendem Kühlmittel die Abdichtung vorgenommen ist, mit der Folge, daß das gegebenenfalls aggressive Kühlmittel nicht an Stellen gelangen kann, die hierdurch geschädigt werden könnten, beispielsweise in Form der Spindellagerung.

Bei einer bevorzugten Ausführungsform des erfindungsgemäßen Spindelkopfes weist die Abdichteinrichtung zwei Abdichtringe auf, deren Abdichtflächen gegenüber dem Spindelkopfgehäuse an ihren einander abgewandten Stirnseiten liegen. Hierdurch ist eine Ausgestaltung möglich, bei der der jeweilige Abdichtring außenumfangsseitig längs des Spindelkopfgehäuses gleitend geführt ist und dabei reibungsarm auf einem Kühlmittelpolster gleiten kann, das die innere Kühlmittelzufuhr über den Abstand zwischen jeweiligem Abdichtring und Spindel herstellt. Die Abdichtung mit vorgebbarer Leckagemenge läßt sich dann über die dem Spindelkopfgehäuse zugewandte Stirnseite des genannten Abdichtringes gezielt vornehmen.

Bei einer weiteren bevorzugten Ausführungsform des erfindungsgemäßen Spindelkopfes sind die beiden Abdichtringe an ihren einander zugewandten Seiten an die Kühlmittelzufuhr angeschlossen und mittig ist in der Spindel eine Anschlußmöglichkeit für die innere Kühlmittelzufuhr vorhanden. Hierdurch ist eine gute Ansteuerung der Abdichtringe über das Kühlmittel erreicht und der Eingriff der inneren Kühlmittelzufuhr in die Anschlußmöglichkeit benötigt wenig Bauraum und ist somit platzsparend.

Bei einer besonders bevorzugten Ausführungsform des erfindungsgemäßen Spindelkopfes weist jeder Abdichtring außenumfangsseitig ein elastisch nachgiebiges Dichtmittel auf, die sich am Spindelkopfgehäuse abstützend eine Rückstellkraft auf die Abdichtringe ausüben, die diese aneinander zu halten sucht. Aufgrund dieser Anordnung ist auch ein Trockenlauf des Spindelkopfes ohne Kühlmittel möglich. Die beiden Abdichtringe werden aneinandergehalten und nehmen sowohl in axialer als auch in radialer Richtung einen Abstand zu der angetriebenen Spindel ein, so daß insoweit keine schädigende Reibung entsteht und die Spindel in der Spindellagerung frei umlaufen kann.

Bei einer weiteren bevorzugten Ausführungsform des erfindungsgemäßen Spindelkopfes ist die Drosselstelle bei den Abdichtringen durch Schmiertaschen gebildet, die stirnseitig an den einander abliegenden Begrenzungsflächen der Abdichtringe angebracht für den Durchtritt von Kühlmittel eine Leckagestelle bilden. Über die dahingehenden Schmiertaschen baut sich ein geringfügiger Leckagestrom an Kühlmittel auf, der jedoch derart ein Druckpolster ausbildet, daß die drehende Spindel im wesentlichen reibungsfrei innerhalb der stationär im Spindelkopfgehäuse angeordneten Abdichtringe geführt ist. Somit ist eine Art hydrostatische Schmierung erreicht. Vorzugsweise mündet dabei die jeweilige Leckagestelle in den Drainagekanal, der über einen Längskanalabschnitt parallel zur Spindellängsachse verlaufend zumindest an der Werkzeugseite aus dem Spindelkopfgehäuse heraus ins Freie tritt.

Bei einer bevorzugten Ausführungsform des erfindungsgemäßen Spindelkopfes umfaßt die Abdichteinrichtung an der dem Werkzeugschaft abgewandten Seite und nach der am ersten Endabschnitt angreifenden Spindellagerung die Spindel. Mithin ist die Abdichteinrichtung im wesentlichen bauraumsparend zwischen einem ersten und zweiten Endabschnitt des antreibbaren Spindelkörpers im Spindelkopfgehäuse untergebracht.

Bei einer weiteren bevorzugten Ausführungsform des erfindungsgemäßen Spindelkopfes sind in Längsrichtung der Spindel vor und hinter der Abdichteinrichtung weitere Dichtungen vorhanden, wobei eine dieser weiteren Dichtungen die Spindellagerung gegenüber der Abdichteinrichtung abdichtet. Auf diese Art und Weise ist die Schmierung der Spindel über die Leckagestellen gegenüber den sonstigen Teilen der Spindellagerung abgedichtet. Vorzugsweise ist es mit der beschriebenen Anordnung darüber hinaus möglich, die Kühlmittelzufuhr radial am Spindelkopfgehäuse austretend an eine zentrale Versorgung anzuschließen, was gleichfalls Bauraum einspart und eine sichere Versorgung an Kühlmittel sicherstellt.

Im folgenden wird der erfindungsgemäße Spindelkopf anhand der Zeichnung näher erläutert. Es zeigen in prinzipieller und nicht maßstäblicher Darstellung die
- Fig. 1: einen Längsschnitt durch ein Ausführungsbeispiel des Spindelkopfes;
- Fig. 2a,b,c: in Unteransicht, Seitenansicht und Draufsicht den in Blickrichtung auf die Fig.1 linken Abdichtring der dort gezeigten Abdichteinrichtung.

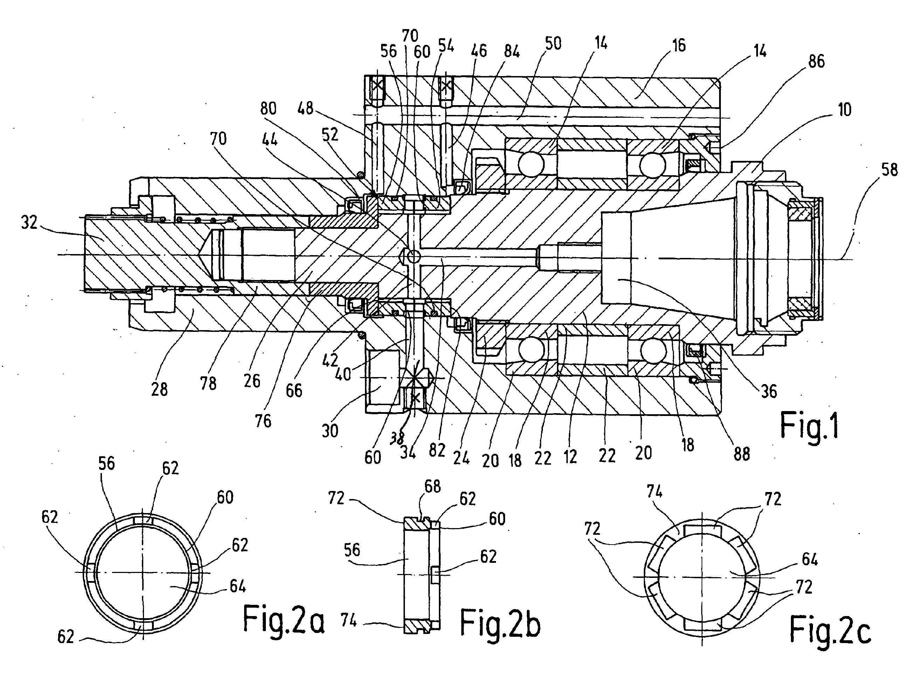

Der Spindelkopf nach der Fig. 1 dient der Aufnahme von nicht näher dargestellten Bearbeitungswerkzeugen, die zur Bearbeitung in der Regel in eine umlaufende Drehbewegung versetzt werden. Hierfür ist eine Spindel 10 im Bereich ihres vorderen Endabschnittes 12 über zwei Wälzlager 14 in einem Spindelkopfgehäuse 16 drehbar gelagert, wobei sowohl die inneren Lagerschalen 18 als auch die äußeren Lagerschalen 20 der beiden Wälzlager über je eine Distanzhülse 22 auf Abstand zueinander gehalten sind. Zum Festlegen der beiden Wälzlager 14 über ihre inneren Lagerschalen 18 auf dem vorderen Endabschnitt 12 der Spindel 10 dient eine Festlegemutter 24, die über ihr Innengewinde auf ein zugehöriges Außengewinde an der Spindel 10 aufschraubbar ist. Der hintere Endabschnitt 26 der Spindel 10 erstreckt sich durch einen am Spindelkopfgehäuse 16 ausgebildeten und sich an dessen eine Stirnfläche anschließenden Hohlschaft 28 hindurch und über dessen freies Ende hinaus. Eine normierte Pinbohrung 30 und der genannte Hohlschaft 28 sind derart ausgebildet, daß sich letzterer in eine Werkzeugaufnahme nach DIN 69880 einfügen läßt. Der über den Hohlschaft 28 überstehende verzahnte Endabschnitt 32 der Spindel 10 ist mit einer nicht näher dargestellten Antriebswelle zum Antrieb der Spindel 10 und damit des Werkzeuges kuppelbar.

Der Endabschnitt 12 der Spindel 10 enthält beispielsweise eine übliche, nicht dargestellte Spannvorrichtung für den Schaft eines nicht näher dargestellten Werkzeuges, beispielsweise in Form eines Bohrers. Bei diesem Werkzeug handelt es sich vorzugsweise um ein solches mit einem inneren Kühlmittelkanal. Wenn der Schaft des Werkzeuges vollständig in die Spannvorrichtung eingesetzt und mittels dieser fest und dicht mit der Spindel 10 verbunden ist, steht eine innere kanalartige Kühlmittelzufuhr 34 mit ihrem vorderen Ende in Verbindung mit einem Spannmittelraum 36 und dergestalt kommt es bei eingesetztem Werkzeug zu einer fluidführenden Verbindung zwischen der inneren Kühlmittelzufuhr 34 und dem inneren Kühlmittelkanal des Werkzeuges. Auf diese Art und Weise läßt sich das Werkzeug bei der Bearbeitung mit Kühlmittel dann entsprechend versorgen.

Die genannte Kühlmittelzufuhr 34 ist Teil einer als Ganzes mit 38 bezeichneten Kühlmittelübertragung mit mehreren Abschnitten an Kühlmittelkanälen 40,42,44. Die innere Kühlmittelzufuhr 34 mit den ihr zugeordneten Kanalabschnitten 42 und 44 ist wiederum über eine als Ganzes mit 52 bezeichnete Abdichteinrichtung mit Drosselstelle von dem Drainagesystem 46,48 und 50 getrennt. Die Abdichteinrichtung 52 besteht im wesentlichen aus zwei Abdichtringen 54 und 56, wobei der in Blickrichtung auf die Fig. 1 gesehen links dargestellte Abdichtring 56 gemäß der Darstellung nach den Fig.2a, 2b und 2c in verschiedenen Ansichten wiedergegeben ist. Ferner ist das Drainagesystem und mithin der Drainagekanal mit seinen Abschnitten 46,48 und 50 mit Umgebungsdruck versehen.

Die beiden Abdichtringe 54,56 umfassen die antreibbare Spindel 10 und sind koaxial zur Spindelachse 58 längsverschiebbar im Spindelkopfgehäuse 16 geführt. Des weiteren sind die beiden Abdichtringe 54,56 an ihren einander zugewandten Seiten 60 an die Kühlmittelzufuhr in Form des Kühlmittelkanalabschnittes 40 angeschlossen. Der Kühlmittelkanalabschnitt 40 mündet in die Anschlußstellen 62 des jeweiligen Ringes 54,56 und ist fluidführend mit dem Inneren 64 des jeweiligen Abdichtringes 54,56 verbunden, wobei das dahingehende Innere 64 unter Beibehalten eines radialen Spaltes 66 von dem Spindelkörper der Spindel 10 jeweils durchgriffen ist.

Die vier Querkanalabschnitte in Form der die Spindel 10 vollständig durchgreifenden Kühlmittelkanäle 42 und 44 münden im endseitigen Bereich in die innere Kühlmittelzufuhr 34 für das Werkzeug, wobei sich die Kühlmittelkanäle 42 und 44 quer zur Spindellängsachse 58 durch die Spindel 10 erstrecken und die innere Kühlmittelzufuhr 34 längs der Spindelachse 58 sich mittig innerhalb des Spindelkörpers erstreckt. Über den genannten Ring- oder Radialspalt 66 erfolgt dann über den jeweils Fluid zuführenden Kühlmittelkanal 40 die Versorgung der inneren Kühlmittelzufuhr 34.

Der jeweilige Abdichtring 54,56 ist außenumfangsseitig mit einer Eingriffsnut 68 (Fig. 2b) versehen, in die ein üblicher O-Dichtring 70 als elastisch nachgiebiges Dichtmittel eingreift. Werden die beiden Abdichtringe 54,56 montiert, stützen sie sich am Spindelkopfgehäuse 16 derart ab, daß eine Rückstellkraft auf die Abdichtringe 54,56 ausgeübt wird, die diese über die jeweilige Seite 60 dann aneinander zu halten sucht. Die Drosselstelle der Abdichteinrichtung 52 ist bei den einzelnen Abdichtringen 54,56 durch Schmiertaschen 72 gebildet, die wiederum durch Vertiefungen an der planen Stirnseite 74 gebildet sind und in Richtung der Spindellängsachse 58 eine fluidführende, insbesondere Kühlmittel führende Verbindung mit dem Radialspalt 66 bzw. mit dem Inneren 64 des jeweiligen Abdichtringes 54,56 bilden.

Wie sich insbesondere aus der Fig.2c ergibt, sind die sechs diametral zueinander angeordneten Schmiertaschen 72 für einen Abdichtring 54,56 vorhanden. Die beiden voneinander abliegenden Stirnseiten 74 bilden Begrenzungsflächen aus, wobei in Blickrichtung auf die Fig.1 gesehen die linke Begrenzungsfläche 74 des Abdichtringes 56 in angrenzender Anlage ist mit der flanschartigen Verbreiterung einer Buchse 76, die über ein Schraubteil 78 des Endabschnittes 32 in ihrer Lage auf dem zweiten Endabschnitt 26 der Spindel 10 gehalten ist, wobei durch Veränderung des Zustellweges der Buchse 76 der freie Abstand der Abdichtringe 54,56 zueinander und gegenüber dem ersten Endabschnitt 12 der Spindel 10 einstellbar ist.

Des weiteren ist die Buchse 76 außenumfangsseitig über eine weitere Dichtung 80 im Spindelkopfgehäuse 16 angeordnet. Da die beiden Abdichtringe 54,56 mithin in axialer Richtung zwischen der flanschartigen Verbreiterung der Buchse 76 und einer Anlageschulter 82 der Spindel 10 über ein vorgebbares Spiel verfügen, bilden die Schmiertaschen 72 über die jeweilige Begrenzungsfläche 74 der Abdichtringe 54,56 eine gewollte Leckagestelle aus, über die das zugeführte Kühlmittel, das den Radialspalt 66 durchfließt, in die Drainagekanäle 46,48 und 50 abgeführt werden kann. Damit über die Leckagestelle, die in den Kühlmittelkanal 46 mündet, kein Kühlmittel in Richtung der Spindellagerung 14 gelangen kann, ist zwischen Spindelkopf gehäuse 16 und erstem Endabschnitt 12 der Spindel 10 eine zweite weitere Dichtung 84 vorhanden.

Des besseren Verständnisses wegen wird nunmehr die Funktion der Abdichteinrichtung 52 anhand einer praktischen Ausführung näher erläutert. Zur Sicherstellung der Funktion ist zunächst der Kühlmittelkanalabschnitt 40 über die Pinbohrung 30 an eine Kühlmittelversorgung anzuschließen. Ist die Kühlmittelzufuhr angeschlossen und baut sich im Kühlmittelkanal 40 ein entsprechender Fluiddruck auf, werden die über die O-Dichtringe 70 aneinandergehaltenen Abdichtringe 54,56 voneinander weg bewegt, wobei sich der weitere Fluiddruck über den Radialspalt 66 aufbaut und anschließend in den Schmiertaschen 72 der Begrenzungsflächen 74 ansteht. Aufgrund der schwimmenden Anordnung der Abdichtringe 54,56 im Spindelkopfgehäuse 16 stellt sich für diese ein dynamisches Gleichgewicht ein und diese sind im wesentlichen reibungsfrei sowohl aneinander als auch an der Buchse 76 sowie an der Anlageschulter 82 der Spindel 10 geführt. Somit kann die Spindel 10 hohe Drehzahlen und Drehmomente an das Bearbeitungswerkzeug weitergeben, ohne daß dies einen schädlichen Einfluß auf die Abdichteinrichtung 52 hätte.

Der genannte Leckagestrom an Kühlmittel läßt sich über die Drainagekanalabschnitte 46,48 und 50 weitergeben und von dort aus ins Freie führen. Zusätzliche, nicht näher dargestellte Kühlmittellängskanäle können vorhanden sein, um unmittelbar hohe unter Druck stehende Mengen an Kühlmittel dem Werkzeug von außen her zuzuführen. Wird die Kühlmittelzufuhr über den Kanal 40 unterbrochen, stellen die beiden O-Dichtringe 70 die Abdichtringe 54,56 zurück und neben dem Radialspalt 66 kommt es zu einer Axialspaltbildung zwischen den jeweiligen Begrenzungsflächen 74 und den zugewandten Seiten von Buchse 76 und Anlageschulter 82 der Spindel 10. In dieser Konstellation wäre es dann auch möglich, eine Trockenbearbeitung mit dem Spindelkopf durchzuführen, da die Spindel 10 in einem dahingehenden Fall berührungsfrei in den Abdichtringen 52,54 geführt ist. Ansonsten ist mit der genannten Anordnung, also bei Kühlmittelzufuhr, eine Art hydrostatische Schmierung erreicht.

Da alle Dichtsysteme hinter der Spindellagerung 14 angeordnet sind, läßt sich diese weit nach vorne im Spindelkopfgehäuse 16 in Richtung der Werkzeugaufnahme anordnen. Somit ist der erste oder vordere Endabschnitt 12 der Spindel 10 im Bereich des Eingriffs des Werkzeuges geführt, was hohe Bearbeitungsgenauigkeiten mit dem Werkzeug zuläßt. Auch kann nach Lösen eines Deckelteils 86 des Spindelkopfgehäuses 16 sich unmittelbar ein Zugang zu den Lagerstellen ermöglichen, was insbesondere bei Montage- und Wartungsarbeiten von Vorteil ist. Das Deckelteil selbst ist mit einer Dichteinheit 88 versehen, die das Innere der Spindellagerung 14 gegenüber der Umgebung abdichtet, wobei die Dichteinheit 88 wiederum radial von außen her am vorderen Ende die Spindel 10 umfaßt.

Die Abdichteinrichtung 52 ist in der Art einer Plandichtung ausgebildet, was in Längsrichtung gesehen sehr kurze Einbaulängen für den Spindelkopf ergibt.

## Patentansprüche

1. Spindelkopf für Werkzeuge, der in eine Werkzeugscheibe mit hierfür vorgesehenen Aufnahmen einsetzbar ist, und dessen Spannmittel für den Schaft des Werkzeuges aufweisende Spindel (10) in einem an den Werkzeugschaft aufnehmenden ersten Endabschnitt (12) sich anschließenden zweiten Abschnitt (26) drehbar im Spindelkopfgehäuse (16) gelagert ist, mit einer Spindellagerung (14) und mit einer zumindest teilweise im Spindelkopfgehäuse (16) geführten Kühlmittelzufuhr (34), wobei die Kühlmittelübertragung über mindestens einen Kühlmittelkanal (40,42,44) erfolgt, der eine innere Kühlmittelzufuhr (34) für das jeweilige Werkzeug realisiert, wobei die innere Kühlmittelzufuhr (34) für das Werkzeug über eine Abdichteinrichtung (52) mit Drosselstelle von Teilen eines Drainagekanals (46,48,50) getrennt ist und wobei die Abdichteinrichtung (52) mindestens einen Abdichtring (54,56) aufweist, der die Spindel (10) umfaßt, **dadurch gekennzeichnet, daß** der jeweilige Abdichtring (54,56) koaxial zur Spindelachse (58) längsverschiebbar im Spindelkopfgehäuse (16) geführt ist und daß nach der Längsverschiebung in eine Abdichtstellung der jeweilige Abdichtring (54,56) die innere Kühlmittelzufuhr (34) bis auf eine vorgebbare Leckagemenge von den zuordenbaren Teilen des Drainagekanals (46,48,50) trennt.

2. Spindelkopf nach Anspruch 1, **dadurch gekennzeichnet, daß** die Abdichteinrichtung (52) zwei Abdichtringe (54,56) aufweist, deren Abdichtflächen gegenüber dem Spindelkopfgehäuse (16) an ihren einander abgewandten Stirnseiten liegen.

3. Spindelkopf nach Anspruch 2, **dadurch gekennzeichnet, daß** die beiden Abdichtringe (54,56) an ihren einander zugewandten Seiten (60) an die Kühlmittelzufuhr angeschlossen sind.

4. Spindelkopf nach Anspruch 2 oder 3, **dadurch gekennzeichnet, daß** jeder Abdichtring (54,56) außenumfangsseitig ein elastisch nachgiebiges Dichtmittel (70) aufweist, die sich am Spindelkopfgehäuse (16) abstützend eine Rückstellkraft auf die Abdichtringe (54,56) ausüben, die diese aneinander zu halten sucht.

5. Spindelkopf nach einem der Ansprüche 2 bis 4, **dadurch gekennzeichnet, daß** die Drosselstelle bei den Abdichtringen (54,56) durch Schmiertaschen (72) gebildet ist, die stirnseitig an den einander abliegenden Begrenzungsflächen (74) der Abdichtringe (54,56) angebracht für den Durchtritt von Kühlmittel eine Leckagestelle bilden.

6. Spindelkopf nach Anspruch 5, **dadurch gekennzeichnet, daß** die jeweilige Leckagestelle in den Drainagekanal (46,48 und 50) mündet, der zumindest an der Werkzeugseite aus dem Spindelkopfgehäuse (16) heraus ins Freie tritt.

7. Spindelkopf nach einem der Ansprüche 1 bis 6, **dadurch gekennzeichnet, daß** die Abdichteinrichtung (52) an der dem Werkzeugschaft abgewandten Seite und nach der am ersten Endabschnitt (12) angreifenden Spindellagerung (14) die Spindel (10) umfaßt.

8. Spindelkopf nach einem der Ansprüche 1 bis 7, **dadurch gekennzeichnet, daß** in Längsrichtung der Spindel (10) vor und hinter der Abdichteinrichtung (52) weitere Dichtungen (80,84) vorhanden sind und daß eine dieser weiteren Dichtungen (84) die Spindellagerung (14) gegenüber der Abdichteinrichtung (52) abdichtet.

9. Spindelkopf nach einem der Ansprüche 1 bis 8, **dadurch gekennzeichnet, daß** mit der Abdichteinrichtung (52) auch ein Trockenlauf ohne Kühlmittel für die Werkzeugbearbeitung möglich ist.

10. Spindelkopf nach einem der Ansprüche 1 bis 9, **dadurch gekennzeichnet, daß** die Kühlmittelzufuhr (40) radial am Spindelkopfgehäuse (16) austretend an eine zentrale Versorgung oder an eine Pinbohrung (30) anschließbar ist.

## Claims

1. Spindle head for tools, insertable into a tool disc with recesses envisaged for the same, whose spindle (10) comprising tensioning means for the shaft of the tool is bearingly and rotatably positioned in the spindle head housing (16) adjacent to a first end section (12) receiving the tool shaft followed by a second section (26), with a spindle bearing (14), and with a coolant supply (34) at least partially held within the spindle head housing (16), whereby the coolant transmission is realised by means of at least one coolant channel (40, 42, 44) which in turn realises an internal coolant supply (34) for the relevant tool, whereby the internal coolant supply (34) for the tool is separated by a sealing means (52) with a throttle from parts of a drainage channel (46, 48, 50), and whereby the sealing means (52) comprises at least one sealing ring (54, 56) which encloses the spindle (10), **characterised in that** the relevant sealing ring (54, 56) is longitudinally displaceable inside the spindle head housing (16) coaxially in relation to the spindle axis (58), and **in that** following the longitudinal displacement into a sealing position of the relevant sealing ring (54, 56) the internal coolant supply (34) is separated from the associated parts of the drainage channel (46, 48, 50) with the exception of a pre-determinable leakage volume.

2. Spindle head according to Claim 1, **characterised in that** the sealing means (52) comprises two sealing rings (54, 56), the sealing surfaces of which are located opposite the spindle head housing (16) at their facing sides facing away from each other.

3. Spindle head according to Claim 2, **characterised in that** the two sealing rings (54, 56) are connected to the coolant supply at their ends (60) that face each other.

4. Spindle head according to Claim 2 or 3, **characterised in that** each sealing ring (54, 56) comprises an elastically yielding sealing means (70) around its outer circumference, the same being supported against the spindle head housing (16) and applying a returning force to the sealing rings (54, 56) that attempt to hold the same against each other.

5. Spindle head according to one of the Claims 2 to 4, **characterised in that** the throttle of the sealing rings (54, 56) is formed by lubrication pockets (72) located on the facing side of limiting surfaces (74) of the sealing rings (54, 56) facing away from each other, fitted here as a leakage point for the passage of coolant.

6. Spindle head according to Claim 5, **characterised in that** the relevant leakage point opens out into the drainage channel (46, 48, and 50), which opens from the spindle head housing (16) to atmosphere at least on the tool side.

7. Spindle head according to one of the Claims 1 to 6, **characterised in that** the sealing means (52) encloses the spindle (10) on the side facing away from the tool shaft and after the spindle bearing (14) engaging the first end section (12).

8. Spindle head according to one of the Claims 1 to 7, **characterised in that** further seals (80, 84) are located before and after the sealing means (52) in a longitudinal direction of the spindle (10), and **in that** one of these further seals (84) seals the spindle bearing (14) against the sealing means (52).

9. Spindle head according to one of the Claims 1 to 8, **characterised in that** a dry run without coolant is possible with the sealing means (52) for processing the tool.

10. Spindle head according to one of the Claims 1 to 9, **characterised in that** the coolant supply (40) can be radially connected with a central supply or a pin bore (30) upon exiting the spindle head housing (16).

## Revendications

1. Tête de broche pour des outils, qui peut être insérée dans un disque d'outil ayant des logements prévus à cet effet et dont le moyen de serrage pour la broche (10) pourvue de la tige de l'outil est monté à rotation dans le boîtier (16) de tête de broche dans une deuxième partie (26) se raccordant à la première partie (12) recevant la tige d'outil, comportant un palier (14) de broche et comportant une alimentation (34) en réfrigérant passant au moins partiellement dans le boîtier (16) de tête de broche, dans laquelle la transmission de réfrigérant s'effectue par l'intermédiaire d'au moins un canal (40, 42, 44) de réfrigérant qui réalise une alimentation (34) intérieure en réfrigérant pour l'outil respectif, l'alimentation (34) intérieure en réfrigérant pour l'outil étant séparée de parties d'un canal (46, 48, 50) d'évacuation au moyen d'un dispositif (52) d'étanchéité pourvu d'un point d'étranglement et que le dispositif (52) d'étanchéité comprenant au moins une bague (54, 56) d'étanchéité qui entoure la broche (10), **caractérisée en ce que** la bague (54, 56) d'étanchéité respective est guidée à déplacement longitudinal dans le boîtier (16) de tête de broche coaxialement à l'axe (58) de la broche, et **en ce qu'**à la suite du déplacement longitudinal dans une position d'étanchéité, la bague (54, 56) d'étanchéité respective sépare l'alimentation (34) intérieure en réfrigérant des parties associables du canal (46, 48, 50) d'évacuation hormis une quantité prescriptible de fuite.

2. Tête de broche suivant la revendication 1, **caractérisée en ce que** le dispositif (52) d'étanchéité comporte deux bagues (54, 56) d'étanchéité dont les surfaces d'étanchéité se situent en vis-à-vis du boîtier (16) de tête de broche sur les côtés frontaux mutuellement opposés.

3. Tête de broche suivant la revendication 2, **caractérisée en ce que** les deux bagues (54, 56) d'étanchéité sont raccordées à l'alimentation en réfrigérant sur leurs côtés (60) se faisant face.

4. Tête de broche suivant la revendication 2 ou 3, **caractérisée en ce que** chaque bague (54, 56) d'étanchéité comporte sur son pourtour extérieur un moyen (70) d'étanchéité élastiquement flexible qui, en s'appuyant sur le boîtier (16) de tête de broche, exerce sur les bagues (54, 56) d'étanchéité une force de rappel qui tend à les maintenir l'une contre l'autre.

5. Tête de broche suivant l'une des revendications 2 à 4, **caractérisée en ce que** le point d'étranglement au niveau des bagues (54, 56) d'étanchéité est formé par des poches (72) de lubrification qui, en étant ménagées frontalement sur les surfaces (74) de délimitation mutuellement distantes des bagues (54, 56) d'étanchéité, constituent un point de fuite pour le passage de réfrigérant.

6. Tête de broche suivant la revendication 5, **caractérisée en ce que** le point de fuite respectif débouche dans le canal (46, 48, 50) d'évacuation qui quitte le boîtier (16) de tête de broche à l'air libre au moins du côté de l'outil.

7. Tête de broche suivant l'une des revendications 1 à 6, **caractérisée en ce que** le dispositif (52) d'étanchéité entoure la broche (10) sur le côté opposé à la tige d'outil et après le palier (14) de broche qui attaque la première partie (12).

8. Tête de broche suivant l'une des revendications 1 à 7, **caractérisée en ce que** d'autres joints (80, 84) d'étanchéité sont présents avant et après le dispositif (52) d'étanchéité dans la direction longitudinale de la broche (10), et **en ce qu'**un de ces autres joints (84) d'étanchéité rend étanche le palier (14) de broche vis-à-vis du dispositif (52) d'étanchéité.

9. Tête de broche suivant l'une des revendications 1 à 8, **caractérisée en ce que** le dispositif (52) d'étanchéité permet également un fonctionnement à sec sans réfrigérant pour l'usinage avec l'outil.

10. Tête de broche suivant l'une des revendications 1 à 9, **caractérisée en ce que** l'alimentation (40) en réfrigérant peut, en sortant radialement du boîtier (16) de tête de broche, être raccordée à une alimentation centrale ou à un piquage (30).
